# EUROPÄISCHE PATENTSCHRIFT

(11) **EP 3 430 370 B1**
(45) Veröffentlichungstag und Bekanntmachung des Hinweises auf die Patenterteilung: **08.12.2021**
(21) Anmeldenummer: 16721063.2
(22) Anmeldetag: 17.03.2016
(51) Int. Cl.: G01M 17/10, G01B 11/24, G01B 5/20

(54) **VERFAHREN ZUR MESSUNG UND BERECHNUNG VON GEOMETRISCHEN PARAMETERN DER RÄDER EINES RADSATZES FÜR SCHIENENFAHRZEUGE**
METHOD FOR MEASURING AND CALCULATING GEOMETRIC PARAMETERS OF THE WHEELS OF A WHEELSET FOR RAIL VEHICLES
PROCÉDÉ DE MESURE ET DE CALCUL DE PARAMÈTRES GÉOMÉTRIQUES DES ROUES D'UN ESSIEU MONTÉ POUR VÉHICULES FERROVIAIRES

(43) Veröffentlichungstag der Anmeldung: 23.01.2019
(73) Patentinhaber: HEGENSCHEIDT-MFD GmbH, 41812 Erkelenz (DE)
(72) Erfinder: NAUMANN, Hans J., 09117 Chemnitz (DE); NAUMANN, John Oliver, 41849 Wassenberg (DE)
(74) Vertreter: Findeisen Neumann Scheit Partnerschaft mbB
(86) Internationale Anmeldenummer: PCT/DE2016/000132
(87) Internationale Veröffentlichungsnummer: WO 2017/157358

(56) Entgegenhaltungen:
- EP-A1- 1 978 329
- EP-A2- 0 228 500
- DE-A1- 1 815 689
- DE-U1-202005 018 753
- US-A- 5 151 870
- ATTIVISSIMO F ET AL: "A Railway Measurement System to Evaluate the Wheel-Rail Interaction Quality", IEEE TRANSACTIONS ON INSTRUMENTATION AND MEASUREMENT, IEEE SERVICE CENTER, PISCATAWAY, NJ, US, Bd. 56, Nr. 5, 1. Oktober 2007 (2007-10-01), Seiten 1583-1589, XP011192296, ISSN: 0018-9456, DOI: 10.1109/TIM.2007.903583
- HAN PENG ET AL: "A new binary wheel wear prediction model based on statistical method and the demonstration", WEAR, Bd. 324, 5. Oktober 2007 (2007-10-05), Seiten 90-99, XP029196897, ISSN: 0043-1648, DOI: 10.1016/J.WEAR.2014.11.022

## Beschreibung

Die Erfindung betrifft ein Verfahren zur Messung und Berechnung von geometrischen Parametern der Räder eines Radsatzes für Schienenfahrzeuge, wobei der zu bewertende Radsatz in einer Radsatzbearbeitungsmaschine oder in einem Radsatzdiagnosesystem drehbar gelagert wird und wobei während einer rotierenden Bewegung dieses Radsatzes Messwerte für eine Profil-Vermessung hinsichtlich eines zu detektierenden Profiverschleißes ermittelt werden.

Radsätze von Schienenfahrzeugen unterliegen einer primär laufleistungsabhängigen Wartungspflicht und müssen daher in Abhängigkeit ihrer konkreten Einsatzbedingungen regelmäßig überprüft und gegebenenfalls instandgesetzt werden. Diese Instandsetzungen werden üblicherweise als spanende Bearbeitungen zum Reprofilieren der Räder unter Verwendung von Radsatzbearbeitungsmaschinen durchgeführt, die in unterschiedlichen Bauformen bekannt sind.

Dabei sind mobile Ausführungen vorteilhaft für den Einsatz bei kleinen und an verschiedenen Standorten zu überprüfenden Fahrzeugflotten. Für größere Fahrzeugbestände (zum Beispiel in Bahnwerken) werden überwiegend fest installierte Maschinen eingesetzt.

Aus EP 0 332 823 A2 ist eine diesbezügliche Überflur-Drehmaschine zur Bearbeitung eines aus einem Schienenfahrzeug ausgebauten Radsatzes bekannt. DE 10 2005 001 220 B4 und DE 20 2007 016 469 U1 beschreiben hingegen Unterflurradsatzdrehmaschinen, bei denen die Radsätze während der Bearbeitung im Schienenfahrzeug eingebaut bleiben, das in der Bearbeitungsposition über die Unterflurradsatzdrehmaschine gerollt wird.

Unabhängig von der konkreten Ausgestaltung der Radsatzbearbeitungsmaschine müssen zunächst die geometrischen Parameter der Räder eines Radsatzes sehr exakt ermittelt werden, bevor die eigentliche spanende Bearbeitung mit dem Ziel einer möglichst optimalen Reprofilierung für eine weitere Nutzungsperiode durchgeführt werden kann. Hierfür wurden bereits verschiedenartige Lösungsansätze vorgeschlagen.

So beschreibt DE 20 2005 018 753 U1 eine Messeinrichtung zur geometrischen Prüfung von Radsätzen, bei der die Radsätze in einer Vorrichtung drehbar aufgenommen werden und über mehrere Sensoren Rundlaufabweichungen der Wellenmittelteile erfasst werden.

Aus EP 0 228 500 A2 ist eine technische Lösung zur berührungslosen Vermessung eines Radsatzes bekannt, bei der mehrere CCD-Kameras mit einer zentralen Auswerteeinheit zur Bildanalyse und Bewertung in Wirkverbindung stehen. Durch Vergleich der aufgenommenen Bilder des Radprofils mit vorab hinterlegten Referenzbildern sind qualitative Bewertungen zu verschiedenen geometrischen Parametern möglich.

Gemäß DE 101 02 673 A1 wird ein Messschlitten parallel zu einem Rad eines über eine Messstrecke bewegten Radsatzes bewegt. Vom Messschlitten wird ein Messstrahl auf die Radlauffläche des zu vermessenden Rades gerichtet. Der reflektierte Messstrahl wird erfasst und daraus die Entfernung zur Radlauffläche ermittelt. Abweichungen gegenüber einer idealen Kontur werden berechnet und es wird ein Zustandsprofil der konkreten Kontur gegenüber den optimalen Parametern erstellt.

Obwohl neben den oben benannten Fundstellen zahlreiche weitere technische Lösungen bekannt sind, besteht weiterhin Entwicklungsbedarf bezüglich der Messung geometrischer Parameter an Radsätzen, der sich insbesondere aus den Sicherheitsanforderungen beim Einsatz von Schienenfahrzeugen im Hochgeschwindigkeitsbereich ergibt.

Aufgabe der Erfindung ist es, die an bekannten Radsatzbearbeitungs- und Radsatzdiagnose-Systemen bereits verfügbaren Messverfahren so zu ergänzen, dass weitere geometrische Parameter erfasst und ausgewertet werden können. Konkret sollen insbesondere Verfahren zur Messung und Berechnung der äquivalenten Konizität sowie der Rundlaufeigenschaft eines Radsatzes als neue Messfunktionen integriert werden. Dabei wird davon ausgegangen, dass sich die Rundlaufeigenschaften eines Rades bzw. Radsatzes durch das eventuelle Vorhandensein von Polygonen bewerten lassen.

Die Aufgabe wird gelöst, indem für eine Ermittlung der äquivalenten Konizität ausgehend von einer Messkreisebene und rechtwinklig zu dieser Messkreisebene nach beiden Seiten hin und in jeweils gleichem Abstand zur Messkreisebene Messwerte aufgenommen werden, von denen jeder Messpunkt Koordinaten der X-Achse und der Z-Achse belegt. Die Erfassung der Messwerte erfolgt mit dem in der Radsatzbearbeitungsmaschine oder dem Radsatzdiagnosesystem vorhandenen Steuersystem als eine punktweise Abtastung und einschließlich der Profilmessung für das linke Rad und das rechte Rad des Radsatzes. Nach der Datenerfassung werden die aufgenommenen Messwerte dahingehend ausgewertet, ob das linke und rechte gedrehte Radprofil gemeinsam in einem korrekten Winkel zum Schienensollprofil stehen. Die Daten werden weiterverarbeitet, indem eine Interpolation durch einen Algorithmus zu den Originaldaten durchgeführt wird. Danach wird die äquivalente Konizität berechnet und nachfolgend werden die Messergebnisse visualisiert und abgespeichert.

Hinsichtlich der Ermittlung der Rundlaufeigenschaft (Polygon) wird die Aufgabe gelöst, indem die Werte des Radumfangs vorzugsweise in der Messkreisebene aufgenommen werden, wobei jeder Messpunkt Koordinaten der X-Achse und der C-Achse belegt. Die Erfassung der Messwerte erfolgt mit dem in der Radsatzbearbeitungsmaschine oder dem Radsatzdiagnosesystem vorhandenen Steuersystem und wird als eine punktweise Abtastung und einschließlich der Radialschlagmessung für das linke Rad und das rechte Rad des Radsatzes durchgeführt. Nach der Messwertaufnahme werden die am linken Rad und am rechten Rad des Radsatzes aufgenommenen Daten weiterverarbeitet, indem diese durch einen Algorithmus gefiltert sowie die Amplitude und die Welligkeit des Polygons ermittelt und ausgewertet werden. Nachfolgend werden die erreichten Messergebnisse visualisiert und abgespeichert.

Mit der erfindungsgemäßen technischen Lösung werden zwei Verfahren zur Messung und Berechnung der äquivalenten Konizität sowie der Rundlaufeigenschaft eines Radsatzes verfügbar, die als weitere Messfunktionen für bekannte Radsatzbearbeitungs- und Radsatzdiagnose-Systeme konzipiert sind, unabhängig von der konkreten Ausführung diesbezüglicher Systeme in Unterflur-, Überflur- oder mobiler Ausführung. Durch diese Berücksichtigung von weiteren Parametern zur Geometrie des Radsatzes werden insbesondere aktuelle Anforderungen an die Sicherheit von Hochgeschwindigkeitszügen erfüllt.

Ein besonderer Vorteil ist dabei, dass die neuen Funktionen hinsichtlich der Datenerfassung, der Berechnung, der Ergebnisanzeige und der Protokollausdrucke vollständig in vorhandene Steuerungen implementiert werden können. Diese neu hinzugefügten Funktionen können wahlweise aktiviert bzw. deaktiviert werden. Sofern diese neuen Messfunktionen nicht aktiviert worden sind, arbeitet die jeweilige Radsatzbearbeitungs- oder Radsatzdiagnose-Maschine in üblicher Weise die bisherigen Funktionen ab. Sind die neuen Messfunktionen aktiviert, sind diese zusätzlich verfügbar, ohne dass sich Einschränkungen an bisherigen Messfunktionen ergeben.

Für die Datenerfassung zur äquivalenten Konizität werden mit einem zum ursprünglichen Messverfahren erweiterten Programmsegment Werte in einem Bereich der Messkreisebene aufgenommen. Dabei dreht sich der Radsatz mit einer Umfangsgeschwindigkeit und der Spindelantrieb (Z-Achse) kann auf verschiedene Geschwindigkeiten eingestellt werden. Die Abtastung erfolgt durch das Steuersystem punktweise, wobei jeder Punkt Koordinatendaten der X-Achse und Z-Achse belegt. Die Konizitätsmessung wird zeitoptimiert durchgeführt und einschließlich einer Profilmessung.

Es wird überwacht, ob bei der Profil-Vermessung (also bei der Profil-Verschleiß-Messung, bei welcher die Konizitätsmessung enthalten ist) alle notwendigen Punkte aufgenommen wurden, d.h., ob die Anzahl der Messpunkte ausreichend ist. Sofern ein Fehler festgestellt wird, wird ein Bedienerdialog veranlasst, um diese Messung zu wiederholen und/oder um den Fehler zu diagnostizieren und zu beheben.

Die Messkreisebene wird als Referenzpunkt festgelegt. Dieser Punkt wird während der eigentlichen Profil- und ergänzenden Konizitätserfassung gemessen bzw. berechnet (sofern der Punkt interpolierend ermittelt werden muss). Dies ist der Basis-Punkt für die spätere Konizitätsberechnung.

Gemessen werden die Werte des linken Rades und die Werte des rechten Rades. Nach der Datenerfassung werden die aufgenommenen Messwerte dahingehend ausgewertet, ob das linke und rechte gedrehte Radprofil gemeinsam in korrektem Winkel zum Schienensollprofil stehen. Die aufgenommenen Daten werden weiterverarbeitet und eine Interpolation wird durch einen Algorithmus zu den Originaldaten durchgeführt. Dann wird die äquivalente Konizität berechnet.

Dazu wird primär ein integrales Verfahren angewendet, eine hierzu vereinfachte Methode ist lediglich sekundär und als Kontrolle vorgesehen. Die Konizitätsmessung erfolgt zum Beispiel mit drei Werten pro Messung für ein Vorvermessen und/oder ein Nachvermessen. Dabei umfasst die vereinfachte Konizität zwei Ergebnisse, nämlich jeweils für die linke und rechte Radscheibe und die integrale Konizität ein Ergebnis, nämlich für beide Radscheiben.

Diese Messergebnisse werden visualisiert, zumindest zeitlich begrenzt abgespeichert und in einem Protokoll dokumentiert. Das somit verfügbare Ergebnis ist ein Indikator dafür, ob die äquivalente Konizität zwischen dem einzelnen Rad bzw. dem gesamten Radsatz und der Schiene als Fahrweg des Schienenfahrzeuges funktionell korrekt ist oder nicht.

Für die Datenerfassung zur Rundlaufeigenschaft (Polygon) werden mit einem zum ursprünglichen Messverfahren erweiterten Programmsegment Werte des Radumfangs vorzugsweise in der Messkreisebene aufgenommen. Der Spindelantrieb (Z-Achse) kann auf verschiedene Geschwindigkeiten eingestellt werden. Die Abtastung erfolgt durch das Steuersystem punktweise, wobei jeder Punkt Koordinatendaten der X-Achse und C -Achse belegt. Diese Daten dienen der späteren Berechnung des Radialschlags bzw. des Polygons der Radscheibe, wobei die Radialschlagermittlung zu den bereits verfügbaren Messfunktionen gehört, welche durch die Polygonmessung ergänzt werden. Durch die Implementierung der Polygonmessung wird mit der Messwertaufnahme direkt auch die Radialschlagmessung durchgeführt, wobei für beide Messungen die gleiche Datenaufnahme genutzt wird. Die Messung von Radialschlag und Polygonermittlung wird zeitoptimiert durchgeführt.

Es wird überwacht, ob der gemessene Radumfang dem gemessenen Raddurchmesser entspricht. Dies ist möglich, weil die Durchmesser-Messung autark von der Polygonmessung ist. Sofern ein Fehler festgestellt wird, wird ein Bedienerdialog veranlasst, um diese Messung zu wiederholen und/oder um den Fehler zu diagnostizieren und zu beheben.

Die Polygonmessung kann in verschiedenen Varianten durchgeführt werden. So kann diese Messung mit einem an der Radsatzbearbeitungsmaschine oder am Radsatzdiagnosesystem vorhandenen Multifunktions-Messtaster durchgeführt werden, der beispielsweise für eine Verschleißprofilmessung oder eine Durchmessermessung vorgesehen ist. Optional ist eine Polygonmessung auch mit einer synchronen Schwenk-Messeinrichtung möglich, die beispielsweise als separate Mechanik zur synchronen Durchmessermessung und zur Schlupfüberwachung ausgestaltet ist. Hierbei sind wiederum zwei Alternativen möglich:
Bei einer ersten Variante wird der Multifunktions-Messtaster zunächst in der Messkreisebene positioniert. Die synchrone Schwenk-Messeinrichtung wird in die Arbeitsposition geschwenkt. Hierbei ist zu beachten, dass die Messradebene und somit die Position des Messrades nicht in der Messkreisebene liegt. Die Messradposition muss jedoch auf die Messkreisebene umgerechnet werden. Sofern ein Radsatz mit extrem verschlissenen oder hohlgelaufenen Rädern vorliegt, ist das eventuell nicht exakt möglich. Sollte ein derartiger Zustand vom Bediener festgestellt werden, ist die nachfolgende zweite Variante vorteilhaft anzuwenden.

Hierbei sind die gleichen Schritte wie bei der ersten Variante vorgesehen. Es wird jedoch eine zusätzliche Teil-Messung mit dem Multifunktions-Messtaster in der Messradebene durchgeführt. Dies ist notwendig, um später eine exakte Umrechnung von der Messradebene auf die Messkreisebene durchführen zu können.

Die über die X-Achse und die C-Achse ermittelten Messwerte unterscheiden sich zwischen dem Startwert der Achse und der eigentlichen Messaufnahme. Dabei wird die C-Achse nicht direkt zur Achsposition erfasst, sondern zur jeweiligen Bogenlänge. Dadurch ist es möglich, diese Messwerte entweder unmittelbar während der Datenverarbeitung oder auch später zu verrechnen.

Die aufgenommen Daten werden durch einen Algorithmus gefiltert und ausgewertet. Die Amplitude und Welligkeit des Polygons werden ermittelt und es wird festgestellt, ob das Rad in der geforderten Toleranz liegt. Die Messergebnisse werden visualisiert, zumindest zeitlich begrenzt abgespeichert und in einem Protokoll dokumentiert. Das somit verfügbare Ergebnis ist ein Indikator dafür, ob ein Rad eine korrekte geometrische Kontur aufweist oder ob ein Polygon vorliegt oder ob polygonartige Schattierungen vorliegen, die auf ein beginnendes Polygon hinweisen.

Nachfolgend wird ein Ausführungsbeispiel unter Bezugnahme auf die Zeichnung erläutert. Es zeigen:
- Fig. 1: einen Ausschnitt aus dem Übergangsbereich vom Rad zur Schiene
- Fig. 2: einen Ausschnitt aus einer beispielhaften Datenerfassung
- Fig. 3: einen Ausschnitt aus einer weiteren beispielhaften Datenerfassung

Das vorgeschlagene Verfahren betrifft die Messung und Berechnung von geometrischen Parametern der Räder eines Radsatzes für Schienenfahrzeuge. Hierbei wird der Radsatz in einer Radsatzbearbeitungsmaschine oder in einem Radsatzdiagnosesystem drehbar gelagert. Während einer rotierenden Bewegung des Radsatzes werden Messwerte für eine Profil-Vermessung hinsichtlich eines zu detektierenden Profiverschleißes ermittelt. Ein derartiger Ablauf ist grundsätzlich bekannt.

Wesentlich im vorliegenden Sachverhalt ist jedoch, dass weitere Parameter als bisher üblich ermittelt werden. Dies betrifft die äquivalenten Konizität und die Rundlaufeigenschaft, wobei sich letztere durch das eventuelle Vorhandensein von Polygonen bewerten lässt.

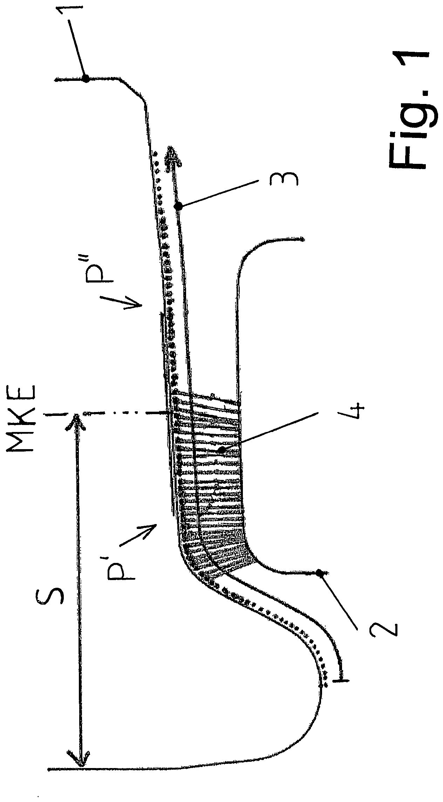

**Fig. 1** zeigt einen Ausschnitt aus dem Übergangsbereich vom Rad 1 eines Radsatzes für ein Schienenfahrzeug zu einer den Fahrweg des Schienenfahrzeuges ausbildenden Schiene 2. In dieser Darstellung sind die für das erfindungsgemäße Verfahren wesentlichen Elemente stilisiert dargestellt.

Für die Ermittlung der äquivalenten Konizität werden ausgehend von einer Messkreisebene MKE rechtwinklig zu dieser entlang des Radprofils nach beiden Seiten hin und in jeweils gleichem Abstand zur Messkreisebene MKE Messwerte aufgenommen. Dieser Bereich ist in Fig. 1 mit den Bezugszeichen P' und P" stilisiert und das Bezugszeichen S bezeichnet den Abstand der Messkreisebene MKE vom Radrücken.

Jeder Messpunkt ist durch Koordinaten der X-Achse und der Z-Achse bestimmt. Die Erfassung dieser Messwerte erfolgt mit dem maschinenseitig vorhandenen Steuersystem als eine punktweise Abtastung, wobei gleichzeitig die an sich bekannte vollständige Profilmessung erfolgt. Die Abtastung wird für das linke und das rechte Rad 1 zum Beispiel jeweils an der Spurkranzkuppe begonnen und bis hinter die Messkreisebene MKE durchgeführt. In Fig. 1 ist der Bereich einer Konturvermessung des Profils mit einem Pfeil stilisiert mit dem Bezugszeichen 3. Im Bereich des Bezugszeichens 4 erfolgt zusätzlich zur Konturvermessung eine fortschreitende Aufnahme von Messwerten zur Berechnung der äquivalenten Konizität. Die punktweise Abtastung erfolgt beispielsweise mit einem Abstand von etwa 0,2 mm von Messpunkt zu Messpunkt, wobei zum Beispiel etwa 400 Messpunkte aufgenommen werden. Diese Punkte sind oberhalb des Pfeils mit dem Bezugszeichen 3 als separate Punkte stilisiert.

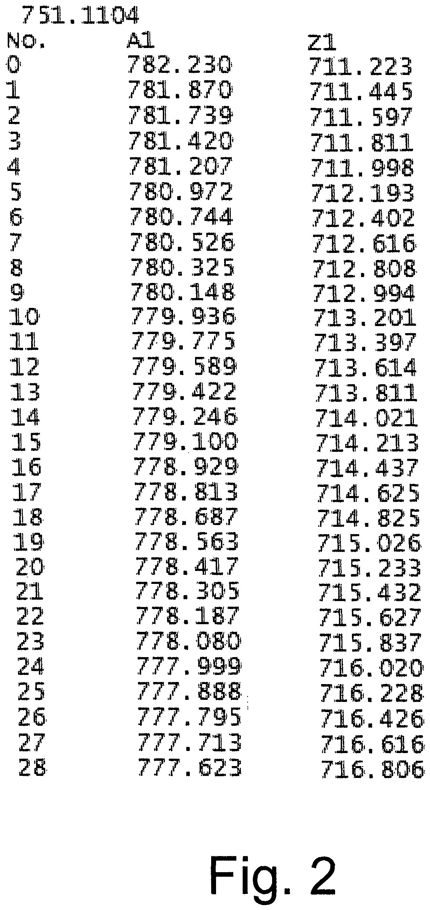

**Fig. 2** zeigt einen Ausschnitt aus einer diesbezüglich beispielhaften Datenerfassung. Die obere Ziffernangabe (751.1104) bezeichnet hier die Koordinate der Messkreisebene MKE auf der Z-Achse. Diese Messkreisebene MKE wird als Referenzpunkt festgelegt. Sofern diese Messkreisebene MKE beispielsweise 70 mm vom Radrücken entfernt ist, betragen somit die Z-Achsen-Koordinaten als Referenzpunkt 70 mm. Dieser Punkt ist der Basis-Punkt für die Berechnung der äquivalenten Konizität. Das Protokoll ist als Tabelle gestaltet mit drei Spalten, in denen von links beginnend für ein Rad 1 die Nummer des Messpunktes, die Koordinate des Messpunktes auf der X-Achse und die Koordinate des Messpunktes auf der Z-Achse dokumentiert sind.

Die Messwerte werden beispielsweise in einem Bereich von +/- 10 mm bis +/- 40 mm zur Messkreisebene MKE aufgenommen. Während der Messwerterfassung wird der Spindelantrieb (Z-Achse) vorzugsweise auf maximal mögliche Geschwindigkeit eingestellt und der Radsatz wird beispielsweise mit einer Umfangsgeschwindigkeit von 5 m x min⁻¹ bewegt.

Gemessen werden die Werte des linken und des rechten Rades 1. Nach der Datenerfassung werden die aufgenommenen Messwerte dahingehend ausgewertet, ob das linke und rechte gedrehte Radprofil gemeinsam in korrektem Winkel zum Schienensollprofil stehen. Die aufgenommenen Daten werden weiterverarbeitet und eine Interpolation wird durch einen Algorithmus zu den Originaldaten durchgeführt. Danach wird die äquivalente Konizität berechnet und nachfolgend werden die Messergebnisse visualisiert und abgespeichert.

Für die Ermittlung der Rundlaufeigenschaft (Polygon) werden die Werte des Radumfangs in der Messkreisebene MKE aufgenommen. Dabei ist jeder Messpunkt durch Koordinaten der X-Achse und der C-Achse bestimmt. Auch die Erfassung dieser Messwerte erfolgt mit dem maschinenseitig vorhandenen Steuersystem als punktweise Abtastung, wobei gleichzeitig eine an sich bekannte Radialschlagmessung durchgeführt wird. Die Abtastung wird für das linke und das rechte Rad 1 des Radsatzes durchgeführt. Die punktweise Abtastung erfolgt beispielsweise mit einem Abstand von etwa 0,5° von Messpunkt zu Messpunkt, wobei zum Beispiel etwa 720 Messpunkte aufgenommen werden.

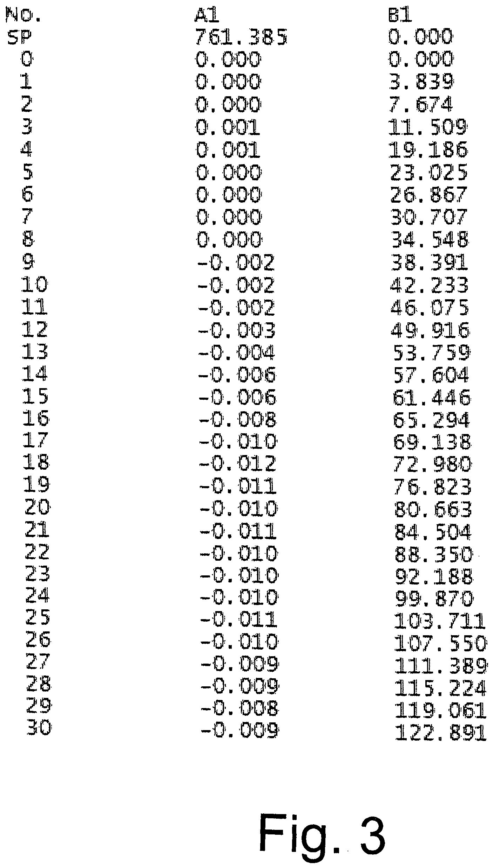

**Fig. 3** zeigt einen Ausschnitt aus einer diesbezüglich beispielhaften Datenerfassung. Diese ist als Tabelle gestaltet mit drei Spalten, in denen von links beginnend für ein Rad 1 die Nummer des Messpunktes, die Koordinate des Messpunktes auf der X-Achse und die Koordinate des Messpunktes auf der C-Achse dokumentiert sind.

Während der Messwerterfassung wird der Spindelantrieb (Z-Achse) vorzugsweise auf maximal mögliche Geschwindigkeit eingestellt.

Nach der Datenerfassung wird eine Abweichung zwischen dem Startwert der Messung und einer nachfolgenden Messwertaufnahme festgestellt und die am linken und am rechten Rad 1 des Radsatzes aufgenommenen Daten werden weiterverarbeitet, indem diese durch einen Algorithmus gefiltert werden. Die Amplitude und die Welligkeit des Polygons werden ermittelt und ausgewertet, wobei beispielsweise eine Aussage möglich ist, ob das Rad 1 innerhalb vorab definierter Toleranzgrenzen liegt. Danach werden die Messergebnisse visualisiert und abgespeichert.

Die Visualisierung der Messergebnisse kann in Abhängigkeit konkreter Nutzerwünsche unterschiedlich ausgestaltet werden, wobei eine grafische Bildschirmdarstellung bevorzugt wird, beispielsweise als Ansicht entlang der X-Achse und der C-Achse oder auf die Z-Achse.

Die Messung zur Ermittlung der Rundlaufeigenschaft (Polygon) wird vorzugsweise mit einem Multifunktions-Messtaster und gegebenenfalls zusätzlich mit einer synchronen Schwenk-Messeinrichtung durchgeführt. Hierbei wird mit "synchron" eine zur Bearbeitung synchrone Bewegung bezeichnet.

Sofern der jeweilige Multifunktions-Messtaster so ausgestaltet ist, dass er alle notwendigen Messungen (X-Achse und C-Achse) durchführen kann, wird lediglich ein solcher Messtaster benötigt.

Kann der Multifunktions-Messtaster hingegen nur den X-Wert aufnehmen, so erfolgt eine Messwertaufnahme der C-Achse über eine synchrone Schwenk-Messeinrichtung. Bei dieser Variante wird der Messtaster zunächst in der Messkreisebene MKE positioniert und danach wird die synchrone Schwenk-Messeinrichtung in Arbeitsposition geschwenkt. Die Messrad-Position wird auf die Messkreisebene MKE umgerechnet.

Alternativ kann eine zusätzliche Teilmessung mit dem Multifunktions-Messtaster in der Messradebene MRE durchgeführt werden, bevor die Messrad-Position auf die Messkreisebene MKE umgerechnet wird. Falls eine geringe Zykluszeit primär ist (bei einem schlechteren Messergebnis) können die Messungen während der Bearbeitung mit der synchronen Schwenk-Messeinrichtung durchgeführt werden.

## Patentansprüche

1. Verfahren zur Messung und Berechnung von geometrischen Parametern der Räder eines Radsatzes für Schienenfahrzeuge, wobei der zu bewertende Radsatz in einer Radsatzbearbeitungsmaschine oder in einem Radsatzdiagnosesystem drehbar gelagert wird und wobei während einer rotierenden Bewegung dieses Radsatzes Messwerte für eine Profil-Vermessung hinsichtlich eines zu detektierenden Profiverschleißes ermittelt werden,
**dadurch gekennzeichnet,**
**dass** für eine Ermittlung der äquivalenten Konizität ausgehend von einer Messkreisebene (MKE) und rechtwinklig zu dieser Messkreisebene (MKE) nach beiden Seiten hin und in jeweils gleichem Abstand zur Messkreisebene (MKE) Messwerte aufgenommen werden, von denen jeder Messpunkt Koordinaten der X-Achse und der Z-Achse belegt,
wobei die Erfassung der Messwerte mit dem in der Radsatzbearbeitungsmaschine oder dem Radsatzdiagnosesystem vorhandenen Steuersystem als eine punktweise Abtastung erfolgt und einschließlich der Profilmessung für das linke Rad und das rechte Rad des Radsatzes durchgeführt wird,
wobei die aufgenommenen Messwerte nach der Datenerfassung dahingehend ausgewertet werden, ob das linke und rechte gedrehte Radprofil gemeinsam in einem korrekten Winkel zum Schienensollprofil stehen und
wobei nach der Messwertaufnahme die am linken Rad und am rechten Rad des Radsatzes aufgenommenen Daten weiterverarbeitet werden, indem eine Interpolation durch einen Algorithmus zu den Originaldaten durchgeführt wird, danach die äquivalente Konizität berechnet wird und nachfolgend die Messergebnisse visualisiert und abgespeichert werden.

2. Verfahren zur Messung und Berechnung von geometrischen Parametern der Räder eines Radsatzes für Schienenfahrzeuge, wobei der zu bewertende Radsatz in einer Radsatzbearbeitungsmaschine oder in einem Radsatzdiagnosesystem drehbar gelagert wird und wobei während einer rotierenden Bewegung dieses Radsatzes Messwerte für eine Profil-Vermessung hinsichtlich eines zu detektierenden Profiverschleißes ermittelt werden, **dadurch gekennzeichnet,**
**dass** für eine Ermittlung der Rundlaufeigenschaft, die sich
durch das eventuelle Vorhandensein von Polygonen bewerten lässt,
die Werte des Radumfangs in der Messkreisebene (MKE) aufgenommen werden, wobei jeder Messpunkt Koordinaten der X-Achse und der C-Achse belegt,
wobei die Erfassung der Messwerte mit dem in der Radsatzbearbeitungsmaschine oder dem Radsatzdiagnosesystem vorhandenen Steuersystem als eine punktweise Abtastung erfolgt und einschließlich der Radialschlagmessung für das linke Rad und das rechte Rad des Radsatzes durchgeführt wird und
wobei nach der Messwertaufnahme die am linken Rad und am rechten Rad des Radsatzes aufgenommenen Daten weiterverarbeitet werden, indem diese durch einen Algorithmus gefiltert sowie die Amplitude und die Welligkeit des Polygons der Radscheiben ermittelt und ausgewertet werden und nachfolgend die Messergebnisse visualisiert und abgespeichert werden.

3. Verfahren nach Anspruch 1, **dadurch gekennzeichnet,**
**dass** während der Messwerterfassung der Spindelantrieb (Z-Achse) der Radsatzbearbeitungsmaschine oder des Radsatzdiagnosesystems auf eine maximal mögliche Geschwindigkeit eingestellt und der Radsatz mit einer Umfangsgeschwindigkeit von etwa 5 m x min⁻¹ bewegt wird.

4. Verfahren nach Anspruch 2, **dadurch gekennzeichnet,**
**dass** während der Messwerterfassung der Spindelantrieb (Z-Achse) der Radsatzbearbeitungsmaschine oder des Radsatzdiagnosesystems auf eine maximal mögliche Geschwindigkeit eingestellt wird.

5. Verfahren nach Anspruch 1 oder 2, **dadurch gekennzeichnet,**
**dass** die am linken Rad und am rechten Rad des Radsatzes aufgenommenen Daten dahingehend ausgewertet werden, ob das jeweilige Rad innerhalb vorab definierter Toleranzgrenzen liegt.

6. Verfahren nach Anspruch 1 oder 2, **dadurch gekennzeichnet,**
**dass** aus den Messergebnissen eine Bearbeitungsstrategie zur selbsttätigen Änderung von Bearbeitungsparametern durch die Radsatzbearbeitungsmaschine abgeleitet wird.

## Claims

1. A method for measuring and calculating geometric parameters of the wheels of a wheelset for rail vehicles, with the wheelset to be assessed being positioned rotatably in a wheelset reprofiling machine or in a wheelset diagnostic system, and with measured values for a profile measurement relating to a profile wear to be detected being determined during a rotating motion ,
**characterised in that**
for determining the equivalent conicity, starting from a taping line (MKE) and at right angles to this taping line (MKE) on both sides and at respectively the same distance from the taping line (MKE), measured values are acquired where each measuring point occupies coordinates of the X axis and the Z axis,
with the measured values being acquired by means of the control system available in the wheelset reprofiling machine or the wheelset diagnostic system in the form of a point-by-point scan, and including the profile measurement for the left-hand wheel and the right-hand wheel of the wheelset,
with the measured values taken being evaluated after data acquisition in order to determine whether the left-hand and right-hand machined wheel profile together have a correct angle to the rail nominal profile and,
following the measured value acquisition, with the data acquired on the left-hand wheel and on the right-hand wheel of the wheelset being processed further by an interpolation that is carried out in relation to the original data by means of an algorithm, and the equivalent conicity then being calculated and subsequently the measurement results being visualised and stored.

2. A method for measuring and calculating geometric parameters of the wheels of a wheelset for rail vehicles, with the wheelset to be assessed being positioned rotatably in a wheelset reprofiling machine or in a wheelset diagnostic system, and with measured values for a profile measurement relating to a profile wear to be detected being determined during a rotating motion,
**characterised in that**
for a determination of the concentricity property, which can be evaluated by the possible presence of polygons, the values of the wheel circumference are recorded in the taping line (MKE), with each measuring point occupying coordinates of the X axis and the C axis,
with the measured values being acquired by means of the control system available in the wheelset reprofiling machine or the wheelset diagnostic system in the form of a point-by-point scan, and including the radial runout measurement for the left-hand wheel and the right-hand wheel of the wheelset, and,
following the measured value acquisition, with the data acquired on the left-hand wheel and on the right-hand wheel of the wheelset being processed further by filtering the same via an algorithm as well as determining and evaluating the amplitude and the waviness of the wheel discs and subsequently visualising and storing the measurement results.

3. Method according to Claim 1 **characterised in that**
during measured value acquisition the spindle drive (Z axis) of the wheelset reprofiling machine or the wheelset diagnostic system is set to the maximum possible speed and the wheelset is moved with a circumferential speed of approx. 5 m x rpm.

4. Method according to Claim 2 **characterised in that**
during measured value acquisition the spindle drive (Z axis) of the wheelset reprofiling machine or the wheelset diagnostic system is set to the maximum possible speed.

5. Method according to Claim 1 or 2 **characterised in that**
the data acquired on the left-hand wheel and on the right-hand wheel of the wheelset are evaluated in order to determine whether the respective wheel is within pre-defined tolerance limits.

6. Method according to Claim 1 or 2 **characterised in that**
a machining strategy for automatically changing the machining parameters by the wheelset reprofiling machine is derived from the measurement results.

## Revendications

1. Procédé de mesure et de calcul de paramètres géométriques des roues d'un essieu monté pour véhicules ferroviaires pour lequel l'essieu monté à évaluer est monté de manière rotative dans une machine d'usinage d'essieu monté ou dans un système de diagnostic d'essieu monté et pour lequel, pendant le mouvement rotatif de cet essieu monté, des valeurs mesurées sont déterminées pour un mesurage de profil concernant une usure de profil à détecter,
**caractérisé en ce que**
pour la détermination de la conicité équivalente, à partir d'un cercle de mesure (MKE) et perpendiculairement à ce cercle de mesure (MKE) des deux côtés et à respectivement la même distance du cercle de mesure (MKE), sont enregistrées des valeurs mesurées dont chaque point de mesure occupe des coordonnées de l'axe X et de l'axe Z,
pour lequel les valeurs mesurées sont enregistrées, sous forme de palpage par point, par le système de commande existant dans la machine d'usinage d'essieu monté ou le système de diagnostic d'essieu monté et l'enregistrement, y compris la mesure de profil, est effectué pour la roue gauche et la roue droite de l'essieu monté,
pour lequel les valeurs mesurées enregistrées sont évaluées après la saisie des données dans ce sens que les profils de roue, à gauche et à droite, tournés se trouvent ensemble dans un angle correct par rapport au profil de consigne de rail et
pour lequel, après l'enregistrement des valeurs mesurées, les données enregistrées sur la roue gauche et la roue droite de l'essieu monté sont traitées par interpolation en appliquant un algorithme par rapport aux données d'origine puis la conicité équivalente est calculée, ensuite les résultats de la mesure sont visualisés et sauvegardés.

2. Procédé de mesure et de calcul de paramètres géométriques des roues d'un essieu monté pour véhicules ferroviaires pour lequel l'essieu monté à évaluer est monté de manière rotative dans une machine d'usinage d'essieu monté ou dans un système de diagnostic d'essieu monté et pour lequel, pendant le mouvement rotatif de cet essieu monté, des valeurs mesurées sont déterminées pour un mesurage de profil concernant une usure de profil à détecter,
**caractérisé en ce que**
pour une détermination de la propriété de concentricité évaluable par l'existence éventuelle de polygones, les valeurs de la circonférence de roue dans le cercle de mesure (MKE) sont enregistrées, chaque point de mesure occupant les coordonnées de l'axe X et de l'axe C,
pour lequel les valeurs mesurées sont enregistrées, sous forme de palpage par point, par le système de commande existant dans la machine d'usinage d'essieu monté ou le système de diagnostic d'essieu monté et l'enregistrement, y compris la mesure du battement radial, est effectué pour la roue gauche et la roue droite de l'essieu monté et
pour lequel, après l'enregistrement des valeurs mesurées, les données enregistrées sur la roue gauche et la roue droite de l'essieu monté sont traitées en les filtrant par application d'un algorithme, en déterminant et évaluant l'amplitude et l'ondulation du polygone des disques de roue et puis en visualisant et sauvegardant les résultats de la mesure.

3. Procédé selon la revendication 1, **caractérisé en ce que**
pendant l'enregistrement des valeurs mesurées, l'entraînement de broche (axe Z) de la machine d'usinage d'essieu monté ou du système de diagnostic d'essieu monté est réglé sur une vitesse maximale possible et l'essieu monté est déplacé à une vitesse périphérique d'environ 5 m x tr/min.

4. Procédé selon la revendication 2, **caractérisé en ce que**
pendant l'enregistrement des valeurs mesurées, l'entraînement de broche (axe Z) de la machine d'usinage d'essieu monté ou du système de diagnostic d'essieu monté est réglé sur une vitesse maximale possible.

5. Procédé selon la revendication 1 ou 2, **caractérisé en ce que**
les données enregistrées sur la roue gauche et la roue droite de l'essieu monté sont évaluées pour déterminer si la roue concernée respecte les seuils de tolérance préalablement définis.

6. Procédé selon la revendication 1 ou 2, **caractérisé en ce que**
à partir des résultats de la mesure, une stratégie d'usinage permettant la modification automatique des paramètres d'usinage par la machine d'usinage d'essieu monté peut être dérivée.
